# EUROPEAN PATENT APPLICATION

(11) **EP 2 194 519 A1**
(43) Date of publication of application: **09.06.2010**
(21) Application number: 09178252.4
(22) Date of filing: 08.12.2009
(51) Int. Cl.: G09F 3/02, G09F 3/10, G06K 19/077, H01Q 1/22

(54) **Data logger**

(30) Priority: 08.12.2008 US 201166 P
(71) Applicant: White Box, Inc., Stamford, CT 06907 (US)
(72) Inventor: Hollander, Milton, B., 06903 Stamford, CT (US); Macchiarelli, Michael, A., Shelton, CT 06484 (US)
(74) Representative: Witte, Weller & Partner

(57) **Abstract**

Multiple identical data loggers (2) are produced on sheet material and then separated to produce individual products for distribution to separate locations (4). A continuous roll (1) of tape sheet material comprises a contiguous series of data loggers (2) which each include a cover sheet (21, 22), a transponder (24, 33, 27), a sensor (26), a power source (25) (such as a battery), an antenna (27), a microprocessor (24), an adhesive layer (28) and means (3) to separate individual data logger elements from one another. (Fig. 2)

## Description

### DATA LOGGER

This case claims the benefit of our U.S. Provisional co-pending application filed on December 08, 2008, as No. 61/201,166, which is incorporated herein entirely by reference.

### BACKGROUND OF THE INVENTION

The invention finds application in the field of environmental monitoring and recording and relates to semi-active and active radio frequency information device data loggers, such as RFID tags. Tags are applied to or incorporated within a product, animal or person for identification and tracking with radio waves. Tags can be detected and read from beyond line of sight by an RFID reader device. To control manufacturing costs and for ease of dispensing and use it is desirable to produce individual data loggers on a sheet material matrix such as an elongated continuous roll of tape backing. RFID tags contain an integrated circuit for detecting, processing and storing data, which is modulated and demodulated as a radio frequency signal and conveyed by an antenna. Some tags are self-powered by a battery. Passive tags have no battery power supply and require external power. Battery assisted passive tags require a power source to become active, but have no significant higher forward link capability for greater read range. It is known to make individual separate data loggers by a costly time consuming method. Individual modules are used separately for recording and storage of measurement data for subsequent harvesting and use.

It is desirable to sense, measure, transmit and record features of a product during transport and storage. Process variables, such as temperature, pressure, strain, resistance, voltage, humidity all influence consumer products. Such products include flowers, food, and pharmaceuticals. Multiple loggers are used in arrays and radio frequency connection avoids wiring installation cost and reduces maintenance cost.

### SUMMARY OF THE INVENTION

Identical data logger units are produced on a sheet material matrix such as a roll of tape and are then separated from the support matrix for individual disposition and use. Individual loggers are separated by tearing on a pre-weakened seam or perforation, or are mounted to be peeled away from the matrix or from a grid, which is then disposed of or reused. Individual and separate loggers include a protective cover layer, an adhesive backing, a bar coded label and a write upon window area.

### BRIEF DESCRIPTION OF THE DRAWING

- Fig. 1: is a cartoon picture of a roll of data loggers mounted with a tape support.
- Fig. 2: is a diagram showing the elements of data loggers on the tape roll.
- Fig. 3: is a block circuit diagram of the data logger elements connected as in operation of the product. Seven components are seen connected by lines. A power source converter is illustrated for use with an external power supply source.

### DETAILED DESCRIPTION OF THE INVETION

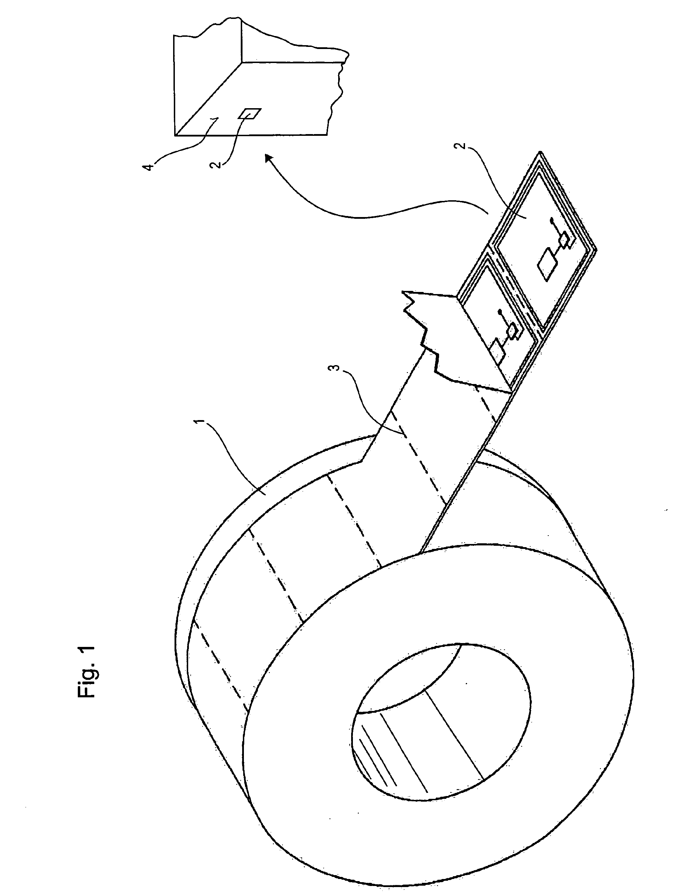

A first embodiment of the invention is seen in Fig. 1, which allows a user to remove individual loggers from a continuous tape matrix roll 1. The roll construction 1 allows separation of individual loggers 2 from the matrix, particularly by a pre-weakened seam or perforation 3, and thereafter to be mounted on a measurement surface 4 for detecting and recording environment features, such as temperature.

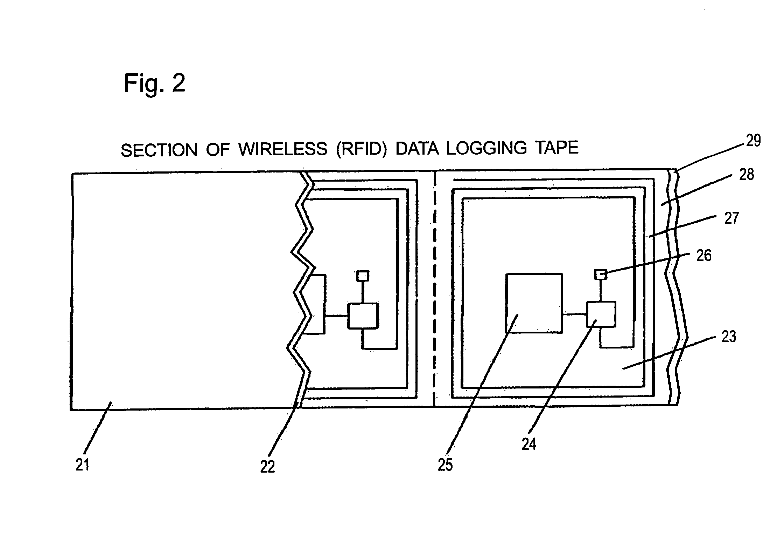

Another embodiment is seen in Fig. 2, which shows detailed construction features of a roll of RFID loggers. Cover labels and an insulation protective layer are peeled back to reveal internal construction of a single removable section. Cover label 1 is placed on an insulation layer 22, which in turn is on top of a flexible printed circuit board 23. The circuit board comprises a micro processor 24, a power supply (such as a battery) 25, a sensor 26, particularly a temperature sensor 26, and an antenna 27. Attached to a surface (particularly a back surface) of the circuit board is an adhesive layer, particularly an adhesive tape, such as peel away release tape 28. The composite article of manufacture comprises a high temperature backing 29 to be removed to expose the tape segment for attachment to a measurement surface.

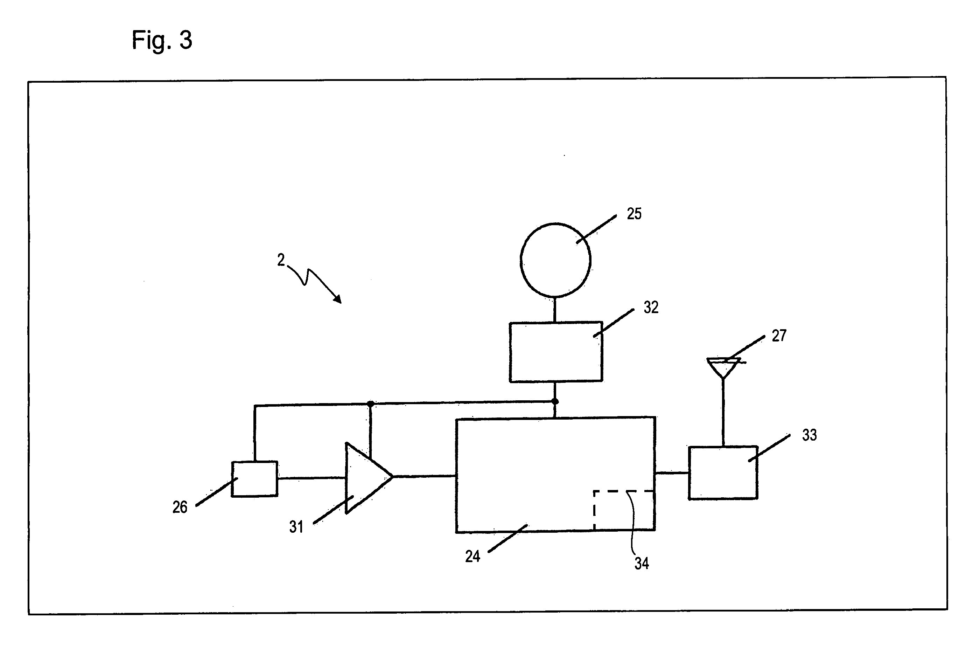

Fig. 3 shows a schematic block diagram of an exemplary RFID data logger 2.

The data logger 2 includes the microprocessor 24, the power source (such as a battery) 25, the sensor 26, particularly a temperature sensor 26, and the antenna 27.

Further, the data logger 2 includes a signal conditioner 31 arranged between the sensor 26 and the microprocessor 24, and an DC-DC converter 32 that is arranged between the power source 25 and the microprocessor 24. Further, the data logger 2 includes a transceiver 33 connected between the microprocessor 24 and the antenna 27.

The microprocessor 24 may include a memory area 34 for storing data of the sensor 26.

The microprocessor 24 is adapted to control the sensor 26 and the signal conditioner 31 as well as the transceiver 34, as is shown by corresponding lines in Fig. 3.

After an individual data logger has been separated from the tape matrix roll 1, the backing 29 is removed. Thereafter, the data logger is attached to a measurement surface 4 by means of the adhesive tape 28.

In one embodiment, the sensor 26 detects a physical parameter like the temperature, and sends a corresponding parameter signal to the signal conditioner 31. The signal conditioner 31 converts the parameter signal into data suitable for the microprocessor 24. The parameter data are stored in the memory area 34.

The microprocessor 24 can be adapted to trigger the sensor 26 to provide corresponding parameter signals at consecutive points of time, e.g. every five minutes or every hour, etc. The data are stored in the memory area 34. Further, a readout device can be brought into the neighborhood of the data logger and send, via antenna 27 and transceiver 33, a readout signal to the microprocessor 24. In response, the microprocessor 24 transmits, via transceiver 33 and antenna 27, the data stored in the memory area 34.

In an alternative embodiment, each data are immediately transmitted by the microprocessor 24 and the transceiver 33 to a recording device arranged within the reach of antenna 27.

After an individual data logger 2 has been attached to a measurement surface, the insulation layer (22) and the cover label (22) preferably remain on top of the printed circuit board 23.

The insulation layer 22 is particularly useful for isolating the sensor 26 from the environment. It can be ensured thereby that the sensor 26 essentially detects the physical parameter (e.g. temperature) of the measurement site 4 to which the data logger 2 is attached.

In summary, multiple identical data loggers are produced on sheet material and then separated to produce individual products for distribution for separate locations. A continuous roll of tape sheet material comprises a contiguous series of data loggers which each include a cover sheet, a transponder, a sensor, a power source (such as a battery), an antenna, a microprocessor, an adhesive layer and means to separate individual data logger elements from one another.

## Claims

1. An article of manufacture comprising a sheet material having a plurality of separate radio frequency data loggers (2; 23) mounted thereupon as discreet units which each comprise a sensor (26), a transmitter, an antenna (27) and a power means (25).

2. A method of manufacture of multiple data logger units which comprises forming separate loggers (2; 23) on a sheet of support material (28) and thereafter separating individual units and fastening them on a surface (4) to detect and measure variable physical parameters.

3. A roll (1) or spool of flexible sheet material tape (28) incorporating individual separable data logger units (2; 23) with means (28) for fastening said units onto a measurement site (4).

4. The article of claim 1, wherein the sheet material comprises pre-weakened seams or perforations (3), by which the individual data loggers (2; 23) are separated.

5. The article of claim1, wherein the data loggers (2;23) are mounted on the sheet material so that they can be peeled away from the sheet material.

6. The article of any of claims 1, 4 or 5, wherein the data loggers (2;23) each comprise means (28) for attaching the data logger to a surface (4).

7. The article of claim 6, wherein the attaching means include an adhesive tape (28).
